# EUROPÄISCHE PATENTSCHRIFT

(11) **EP 2 497 635 B1**
(45) Veröffentlichungstag und Bekanntmachung des Hinweises auf die Patenterteilung: **31.12.2014**
(21) Anmeldenummer: 11157587.4
(22) Anmeldetag: 10.03.2011
(51) Int. Cl.: B32B 21/04, B44C 5/04

(54) **Flexibler Schichtkörper aus Holz und Verfahren zur Herstellung desselben**
Flexible wooden coating body and method for producing same
Corps stratifié flexible en bois et son procédé de fabrication

(43) Veröffentlichungstag der Anmeldung: 12.09.2012
(73) Patentinhaber: Rauch, Augustin, 6822 Schnifis (AT)
(72) Erfinder: Rauch, Augustin, 6822 Schnifis (AT)
(74) Vertreter: Kaminski Harmann

(56) Entgegenhaltungen:
- WO-A1-03/028994

## Beschreibung

Die Erfindung betrifft ein Verfahren zur Herstellung eines dauerhaft elastischen, biegsamen und faltverformbaren Schichtkörpers nach dem Oberbegriff des Anspruchs 1, der im wesentlichen aus Holz und einer flexiblen Schicht, insbesondere aus Pergament, Spannpapier oder Kunststoff-Folie, besteht, und den durch dieses Verfahren erhältlichen Schichtkörper nach dem Oberbegriff des Anspruchs 12.

Holz ist ein vielseitiger, heterogener Naturwerkstoff mit einer reichhaltigen Darstellungsvielfalt und diversen vorteilhaften Materialeigenschaften. So werden unter anderem Optik und Haptik im allgemeinen als angenehm empfunden. Schon seit langer Zeit wird daher versucht, Holz mittels verschiedener Verfahren andere als die natürlich vorliegenden Formen zu geben. Bislang traten dabei jedoch große Probleme auf, da die Formbarkeit von Holz und Verbundmaterialien aus Holz sehr begrenzt ist.

Eine herkömmliche Möglichkeit zur Verformung von Holz sind thermische Formgebungsverfahren. Die Möglichkeiten solcher Verfahren sind allerdings nicht nur sehr beschränkt, bei der Verformung von Verbundmaterialien aus Holz durch thermische Verfahren kommt es außerdem sehr häufig dazu, dass sich die einzelnen Schichten voneinander lösen.

Aus dem Stand der Technik ist eine Reihe von Versuchen bekannt, Schichtkörpern aus Holz und verschiedenen flexiblen Materialien durch unterschiedliche Verfahren eine gewisse Flexibilität und/oder Formbarkeit zu verleihen.

Die US 6,254,951 offenbart einen flexiblen Schichtkörper aus Holzfurnier und einer Lederschicht sowie dessen Herstellung. Hierbei wird die Flexibilität durch einen konventionellen Spannungsabbauprozess und ein anschließendes Tränken der Holzschicht in Leinöl hergestellt. Das ölgetränkte Holz wird abschließend mit Schellack versiegelt.

In der DE 10 2006 019 675 wird ein Schichtkörper aus Holzfurnier auf einem Untergrund aus Leder oder einem lederähnlichen Material offenbart, der in gewissem Maße formbar ist und hauptsächlich als Dekorelement im Fahrzeugbau vorgesehen ist.

Die Anmeldung WO 02/092302 A1 offenbart ein Verfahren zur Herstellung eines dreidimensional biegeverformbaren Schichtkörpers aus Holz oder Holzverbundwerkstoff mittels Einbringung von Nuten in die einzelnen Holzschichten.

Die WO 01/70498 A1 befasst sich mit einem Verbundmaterial aus Holzschichten und einer Karbonfasern enthaltenden Schicht, das durch ein thermisches Verfahren hergestellt wird.

In der WO 2010/060219 wird ein Schichtkörper aus Holzschichten und einer weiteren Schicht aus einem flexiblen Material, der mittels Beugen in einen flexiblen, gewellten Zustand gebracht wird, beschrieben.

In der Gebrauchsmusterschrift DE 29919712 wird die Kombination von Holzfurnier auf einem Kunststoffgewebe zur großflächigen Beschichtung von Rundungen oder Bögen offenbart.

Diese Versuche weisen einige Nachteile auf. So sind entweder die Biegeradien der durch diese Verfahren hergestellten Verbundmaterialien sehr groß oder die mechanisch geformten Materialien sind nicht flexibel bzw. verlieren ihre Flexibilität mit dem Ende des Herstellungsprozesses. Durch thermische Verfahren hergestellte Verbundmaterialien neigen überdies dazu, dass sich die einzelnen Holzschichten voneinander lösen.

Es ist daher eine Aufgabe der Erfindung, einen im wesentlichen aus Holz bestehenden Schichtkörper zur Verfügung zu stellen, der ohne thermische Formgebungsverfahren dauerhaft elastisch und verformbar ist, und der zur Herstellung einer Vielzahl von Produkten dienen kann. Es soll ein Verbundmaterial aus Holz geschaffen werden, das sich ohne Erwärmung, ohne mechanische Krafteinwirkung und gegebenenfalls auch ohne den Einsatz von Werkzeug in seiner Form besonders figurierten Gegebenheiten anpassen lässt. Diese Gegebenheiten umfassen unter anderem graphische Gestaltungsgliederungen optischer, funktionaler und konstruktivischer Art, so zum Beispiel gerade oder diagonal karierte Geflechtmusterstrukturen.

Diese Aufgabe wird in erfindungsgemäßer Weise durch das Verfahren zur Herstellung mit den Merkmalen des Anspruchs 1 und den Schichtkörper mit den Merkmalen des Anspruchs 12 gelöst. Vorteilhafte Ausgestaltungen der Erfindung finden sich dabei in den jeweils abhängigen Ansprüchen.

Die erfindungsgemäße Verwendung von Pergament - oder ersatzweise pergamentähnlicher flexibler Kunststoff-Folie oder reißfestem Spannpapier - als Unterschicht sowie das erfindungsgemäße Verfahren zur Bearbeitung der Holzschichten haben sich jeweils unabhängig voneinander als besonders vorteilhaft erwiesen.

Die Erfindung beinhaltet die Herstellung eines Schichtkörpers aus einer oder mehreren Schichten Holz, sowie einer oder mehreren Schichten Pergament, Spannpapier oder flexibler Kunststoff-Folie in je nach Anforderung unterschiedlichen Stärken und Festigkeiten, wobei die Schicht aus Pergament, Spannpapier oder Folie im wesentlichen vollständig jeweils eine Fläche der angrenzenden Holzschicht(en) bedeckt.

Für die einzelnen Holzschichten wird vorzugsweise ein Furnier verwendet. Anstelle von Furnier kann aber auch Schnittholz größerer Stärke verwendet werden. Die Wahl der Holzart und - stärke ist dabei abhängig von der gewünschten Eigenschaft des Schichtkörpers.

Für die Holzschichten können verschiedenste Hölzer Verwendung finden, sowohl Laub- als auch Nadelhölzer, sowie Maserhölzer und -knollen, wobei sich für die äußeren, im Endprodukt sichtbaren Schichten optisch ansprechende Hölzer besonders anbieten. Anstelle von Holz können auch holzähnliche Stoffe, wie zum Beispiel Bambus, verwendet werden, sofern diese in flächige Vorprodukte überführt werden können.

Die optimale Wahl des Holzes ist wie auch die Schichtdicke und die Anzahl der einzelnen Holzschichten abhängig vom Verwendungszweck und den gewünschten Eigenschaften des fertigen Schichtkörpers und des aus ihm hergestellten Endproduktes. Eine Schichtdicke von 0,3 bis 6 mm hat sich als vorteilhaft erwiesen, es ist aber auch eine Verarbeitung von Schichtdicken von bis zu 10 mm und mehr möglich.

Holz ist bedingt durch sein natürliches Wachstum kein homogener Werkstoff. Insbesondere bestehen durch die Richtung des Verlaufs der Fasern Unterschiede bezüglich der Festigkeit, denn der weitaus größte Teil der Holzfasern ist bedingt durch die Wuchsrichtung des Baumes in derselben Richtung angeordnet. Die Zug- und Druckfestigkeit ist in Faserrichtung deutlich höher als senkrecht zur Faserrichtung. Diese richtungsabhängigen Materialeigenschaften von Holz bezeichnet man auch als *orthogonale Anisotropie* oder Orthotropie. Um bezüglich der Materialeigenschaften, insbesondere der Zugfestigkeit, dennoch ein möglichst gleichförmiges Verbundmaterial zu erhalten, ist es - im bevorzugten Falle der Verwendung von mehr als einer Holzschicht - von Vorteil, die Faserrichtungen der einzelnen Holzschichten im Querverbund zueinander, beispielsweise transversal um 90° verdreht, anzuordnen. Durch die gleichmäßige Verteilung der Festigkeitseigenschaften in allen Richtungen werden die natürlichen Schwächen der einzelnen Schichten ausgeglichen und die Festigkeit des Verbundmaterials wird insgesamt erhöht.

Gleichzeitig werden durch diese Anordnung der Schichten eine materialbedingte Schubverformbarkeit und die größtmögliche Verformbarkeit der Klebeschichten ermöglicht und die funktionale und widerstandsfähige Stabilität und die flexible Federwirkung erhöht.

Die einzelnen Holzschichten werden bei Bedarf mit einem Verstärkungsträger, insbesondere aus Papier oder Vlies, verbunden. Eine bevorzugte Variante ist das Kleben, insbesondere mittels eines Klebstoffes auf Polyurethan- oder Stärkebasis. Polyurethanklebstoffe bieten als wesentliche Vorteile zum einen eine besonders hohe Festigkeit, die auf der Ausbildung kovalenter Bindungen mit den OH-Gruppen der Zellulose des Holzes begründet ist, und zum anderen die Freiheit von Vergilbung und Formaldehydemissionen, was ebenfalls wichtige Qualitätsmerkmale darstellt. Zur Vorbereitung des Klebens ist es förderlich, die zu klebenden Oberflächen der Holzschichten entsprechend vorzubereiten. Dies kann mittels Schleifen, Hobeln oder Finieren unmittelbar vor dem Klebevorgang geschehen, wobei die Eigenschaften der zu klebenden Oberfläche sich aus der jeweils durchgeführten mechanischen Bearbeitung ergeben. Auch ist es möglich, das Holz zur Vorbereitung auf das Kleben mit Löchern oder anderen strukturellen Dekorativ-ornamenten zu versehen, beispielsweise zu perforieren, oder die Oberfläche anderweitig aufzurauhen, zum Beispiel mit einem Laser.

Die Struktur von Holz lässt sich in mehrere Ebenen unterteilen: die Makro-, die Mikro- und die Submikrostruktur. Unter der Makrostruktur des Holzes versteht man diejenigen Strukturmerkmale, die noch mit dem bloßen Auge oder einer Lupe erkennbar sind, also Maserung, Jahresringe etc. Unter der Mikrostruktur versteht man diejenigen Strukturmerkmale, die nicht mehr mit dem bloßen Auge, aber noch mit optischen Mikroskopen sichtbar sind, also die einzelnen Zellen und die von ihnen gebildeten Fasern und Faserbündel. Insbesondere die Holzfasern sind für die mechanische Festigkeit des Holzes verantwortlich. Bei Laubhölzern liegt der Faseranteil im Holz meist zwischen 50 und 60%, bei Nadelhölzern noch darüber. Auch ihre Größe unterscheidet sich je nach Holzart. Die typische Länge einer einzelnen Holzfaser liegt bei Nadelhölzern im Bereich von etwa 3, 5 bis 6 mm, der Durchmesser im Bereich von etwa 0,03 bis 0,06 mm. Bei Buchenholz liegt die Länge der Fasern im Bereich von 1 bis 1,5 mm, die Breite im Bereich von ungefähr 0,02 bis 0,04 mm.

Um den Holzschichten die gewünschte Flexibilität zu verleihen, wird die Mikrostruktur des Holzes erfindungsgemäß in der Längs- wie in der Querrichtung durchgehend und im wesentlichen über die gesamte Breite, Länge und Tiefe der Holzschichten gebrochen. Dabei werden die dem Holz seine mechanische Festigkeit, neben der Zug- und Druckfestigkeit insbesondere die Knick- und Biegefestigkeit, gebenden Strukturen bzw. deren Zusammenhalt zerstört, und zwar dreidimensional sowohl entlang der Faserrichtung als auch quer zu dieser.

Zu den zu zerstörenden Strukturen können je nach Art und Anzahl der Holzschichten, der Verwendung eines Verstärkungsträgers und dem angestrebten Grad der Flexibilität die einzelnen Zellen, die Holzfasern und die aus diesen gebildeten Faserbündel gehören. Je nach gewünschter Flexibilität und den spezifischen Eigenschaften des Schichtkörperrohlings ist es entweder erforderlich, die Mikrostrukturen des Holzes zu zerbrechen, also ein vollständiges Zertrennen des Zusammenhalts der einzelnen Strukturen voneinander zu erreichen, oder aber es ist ausreichend, diese nur anzubrechen bzw. zu knicken.

Dieses erfindungsgemäße Zer- oder Anbrechen der Mikrostruktur wird durch mehrfaches Walzen des Schichtkörperrohlings aus Holzschicht(en) und Verstärkungsträger erreicht.

Für den Walzvorgang können je nach gewählter Art und Anzahl der Holzschichten und dem angestrebten Grad der Flexibilität verschiedenartige Walzenvorrichtungen verwendet werden. Diese Vorrichtungen können beispielsweise aus einem oder mehreren Walzenpaaren oder einer anderen Anordnung mehrerer Walzen - in Reihe oder parallel aufgebaut - bestehen, die sich insbesondere auch hinsichtlich ihrer Größe, Härte, Drehrichtung, Gegendruckeinstellung oder Oberflächenbeschaffenheit voneinander unterscheiden können. Dabei kann entweder ein und dieselbe Walzenvorrichtung mehrmals durchlaufen werden, oder mehrere - gleichartige oder unterschiedliche - Walzenvorrichtungen nacheinander.

Der Schichtkörperrohling wird zwischen den einzelnen Walzvorgängen so gedreht, dass er sowohl längs als auch quer als auch diagonal gewalzt wird, um eine möglichst gleichmäßige und vollflächige Mikrostrukturzerstörung und daraus folgend eine möglichst gleichförmige Flexibilität aller Holzschichten zu gewährleisten.

Ein mit den Holzschichten verbundener Verstärkungsträger verhindert dabei das Brechen des Holzes auf der Ebene der Makrostruktur, sodass die Holzschichten als solche erhalten bleiben, und keine für das bloße Auge sichtbaren Veränderungen in der Holzoberfläche auftreten. Weisen die Holzschichten eine ausreichende Stabilität auf, um eine zur Flexibilisierung ausreichende Zerstörung der Mikrostrukturen ohne makrostrukturelle Schäden zu überstehen, kann auf diesen Verstärkungsträger auch verzichtet werden. Eine ausreichende Stabilität ist unter anderem abhängig von der Stärke und Anzahl der Holzschichten, der Holzart, sowie insbesondere der Art, Dichte und Homogenität der Maserung.

Ein Zerbrechen oder eine teilweise Auflösung des mikrostrukturellen Gefüges der Holzschichten kann alternativ auch durch andere, insbesondere mechanische oder biochemische, Methoden erreicht werden.

Dieser Schichtkörperrohling mit hinsichtlich der Mikrostruktur gebrochenen Holzschichten wird anschließend mit einer weiteren, flexiblen Schicht verbunden, die aus Pergament, Spannpapier oder einer flexiblen Kunststoff-Folie besteht. Für diese Schicht ist zum Zwecke einer höheren und dauerhafteren Flexibilität des fertigen Schichtkörpers bevorzugt Pergament zu verwenden.

Pergament wird aus der Haut von Tieren, insbesondere Schafen, Rindern und Ziegen hergestellt. Anders als bei der Lederherstellung wird die Haut dabei nicht gegerbt, sondern mit einer Kalklösung oder einem anderen Enthaarungsmittel behandelt, wodurch das organische Gewebe aufgeschlossen wird und nur die hauptsächlich aus Kollagen bestehende Lederhaut, das Corium, intakt bleibt. Durch partielles oder vollständiges Abschaben noch vorhandener Haar-, Bindegewebs- und Fleischreste und anschließendes Trocknen der Haut erhält man das Pergament. Für den Zweck der Erfindung besonders geeignet gezeigt hat sich Pergament, das aus der Haut junger Ziegen gewonnen wurde.

Durch Färben, insbesondere mit sauren Farbstoffen wie Luganil, kann je nach Farbton ein zusätzlicher dekorativer Effekt erzielt oder eine eventuell unerwünschte Sichtbarkeit des Pergaments im fertigen Produkt stark verringert werden. Die Verbindung von Holz und Pergament wird vorzugsweise durch Kleben hergestellt, insbesondere mittels eines Klebstoffs auf Polyurethanbasis. Um das Verkleben mit den Holzschichten zu erleichtern, ist es vorteilhaft, die zuvor faserentstaubte Oberfläche des Pergaments vom natürlichen Fett zu befreien, beispielsweise durch Schleifen. Auch Perforieren wirkt sich positiv auf die Klebewirkung und den Zusammenhalt der Schichten aus.

Die Pergamentschichten können sowohl an den Außenseiten des Schichtkörpers als auch im Inneren angebracht sein, je nachdem, ob die sichtbare Oberfläche des Schichtkörpers Holz oder Pergament sein soll.

Es ist auch möglich, statt Pergament eine oder mehrere Schichten aus Spannpapier zu verwenden. Dieses auch Japanpapier oder Washi bzw. Shoji-Papier genannte Material zeichnet sich durch lange Naturfasern aus und ist durch intensive Verfilzung besonders zäh und widerstandsfähig. Insbesondere zeichnet sich Spannpapier durch seine besondere Reiß- und Knickfestigkeit aus, seine nahezu unbegrenzte Faltbarkeit und seine Alterungsbeständigkeit. Auch kann es bei Bedarf wasserabweisend oder schwer entflammbar gemacht werden. Insbesondere durch sichtbare Linienstrukturen der langen Fasern sind diverse optisch ansprechende Strukturen, Musterungen und Farben möglich. Dadurch eignet sich Spannpapier nicht nur als Zwischenlage des Schichtkörpers, sondern auch besonders für eine Verwendung als sichtbare Außenlage.

Es sind diverse Kombinationen von Spannpapier und anderen Materialien denkbar. Es ist sowohl möglich, das Spannpapier ein- oder auch beidseitig mit Kunststoff, beispielsweise Polyvinylchlorid, zu beschichten oder zu laminieren, als auch ein Verbundmaterial mit einer Zwischenlage aus Kunststoff, insbesondere aus Polyethylen, zwischen zwei Lagen Spannpapier zu verwenden. Darüber hinaus ist auch die Verwendung von Spannpapier aus Kunstfasern, zum Beispiel aus Polyester, möglich. Die Verbindung von Holz und Spannpapier wird vorzugsweise durch Kleben hergestellt, bei einem Papier aus Naturfasern bevorzugt mittels eines Klebstoffs auf Stärkebasis. Ein Perforieren des Spannpapiers kann die Klebewirkung verstärken und ist förderlich für den Zusammenhalt der einzelnen Schichten.

Im Falle des alternativen Einsatzes von Kunststoff-Folie wird vorzugsweise eine Folie aus Polypropylen verwendet, die bevorzugt mittels eines Klebstoffes auf Polyurethanbasis mit den porenentstaubten Holzschichten verbunden wird.

Der aus den gewalzten Holzschichten mit oder ohne Verstärkungsträger und dem Pergament oder der flexiblen Kunststoff-Folie bzw. dem Spannpapier zusammengesetzte erfindungsgemäße Schichtkörper kann nun in die gewünschte Form gebracht und/oder mit weiteren erfindungsgemäßen Schichtkörpern und/oder anderen Komponenten zu einem beliebigen Endprodukt weiterverarbeitet werden.

Dabei werden Biegeradien von unter 10 cm, wie sie für das Umfassen menschlicher Gliedmaßen nötig sind, erreicht. Werden besonders geeignete Materialien und Verfahrensparameter gewählt, sind auch Biegeradien von 5 cm und darunter möglich.

Diese und andere Merkmale der Erfindung ergeben sich aus der folgenden Beschreibung einer bevorzugten Ausführungsform der Erfindung, die ein nicht einschränkendes Beispiel darstellt und in der auf die folgenden Zeichnungen Bezug genommen wird, schematisch und nicht maßstabsgetreu einzelne Schritte des erfindungsgemäßen Herstellungsprozesses und verschiedene Ausführungsformen des erfindungsgemäßen Schichtkörpers darstellen:
- Fig. 1: zeigt schematisch das Herstellungsverfahren mit seinen einzelnen Schritten S1-S6.
- Fig.: 2. zeigt schematisch die Verbindung S1 zweier von der Maserung her gegeneinander verdrehter Holzschichten 2a, 2b mit einem Verstärkungsträger 4.

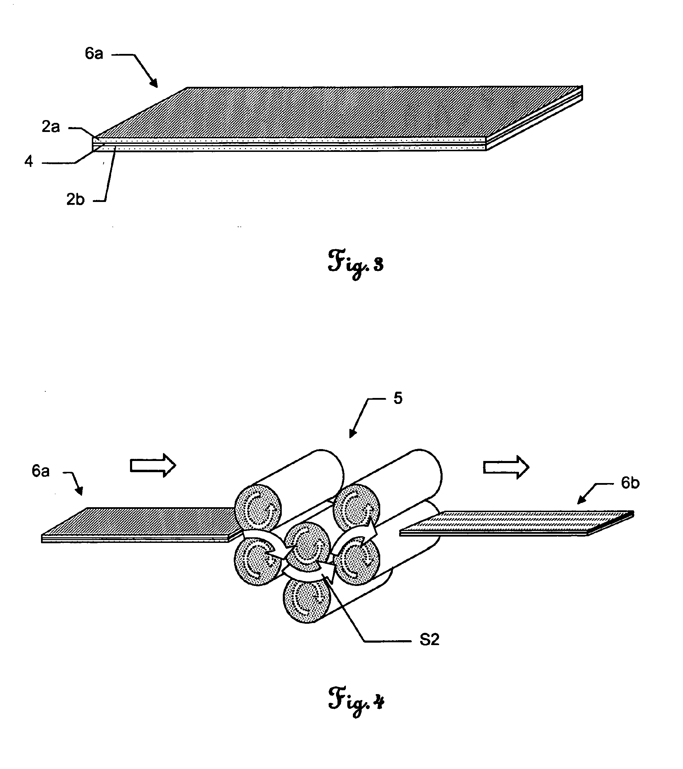

- Fig. 3: zeigt schematisch einen Schichtkörperrohling 6a, bestehend aus zwei von der Maserung her gegeneinander verdrehten Holzschichten 2, 2a, welche durch einen Verstärkungsträger 4 miteinander verbunden sind.
- Fig. 4: zeigt schematisch eine Anordnung von Walzen 5 und einen erfindungsgemäßen Walzvorgang S2 des Schichtkörperrohlings 6a zu einem gewalzten Schichtkörperrohling 6b.
- Fig. 5: zeigt schematisch eine Anordnung von Walzen 5 und den Vorgang des Drehens S3 (hier dargestellt eine Drehung um 90°) des gewalzten Schichtkörperrohlings 6b vor einem erneuten Walzvorgang S2.
- Fig. 6: zeigt schematisch die Verbindung S4 eines mehrfach gewalzten Schichtkörperrohlings 6 mit einer flexiblen Trägerschicht 3, bestehend aus Pergament, Spannpapier oder flexibler Kunststoff-Folie.
- Fig. 7: zeigt schematisch einen erfindungsgemäßen Schichtkörper 1 aus einer Verbundschicht, bestehend aus zwei Holzschichten 2a, 2b, einem Verstärkungsträger 4 und einer flexiblen Trägerschicht 3 aus Pergament, Spannpapier oder flexibler Kunststoff-Folie.
- Fig. 8: zeigt schematisch einen erfindungsgemäßen Schichtkörper 1' mit zwei Verbundschichten sowie einer zwischen diesen befindlichen flexiblen Trägerschicht 3 aus Pergament, Spannpapier oder Kunststoff-Folie.
- Fig. 9: zeigt schematisch einen erfindungsgemäßen Schichtkörper 1'' mit jeweils einer Holzschicht 2 und einer flexiblen Trägerschicht 3 aus Pergament, Spannpapier oder Kunststoff-Folie.

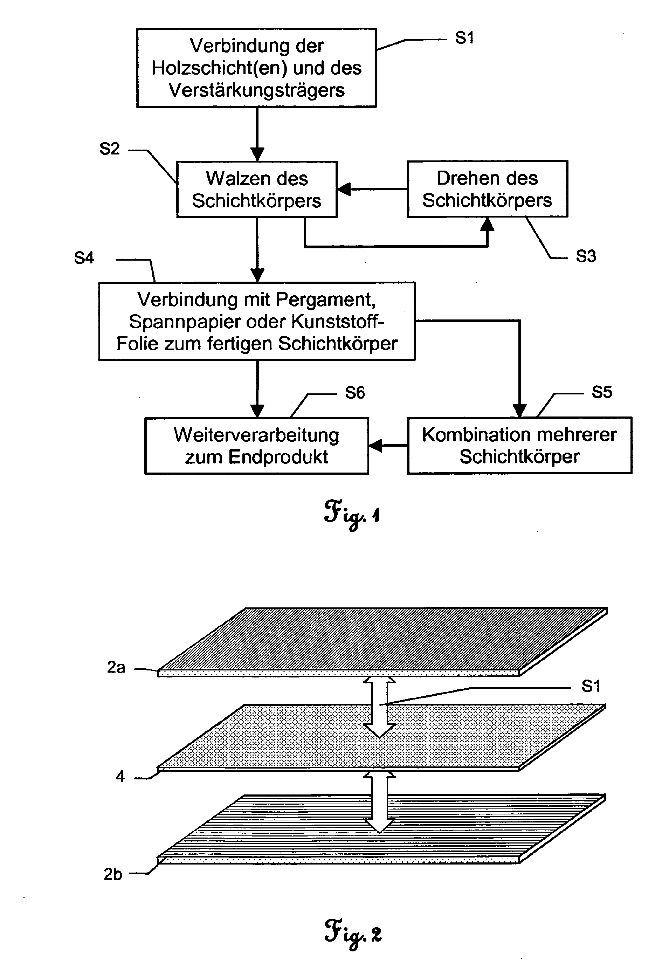

Gemäß den Zeichnungen und dem in Figur 1 dargestellten Schema wird in einem ersten Schritt S1 zunächst aus zwei von der Maserung her zueinander um 90° versetzt angeordneten Holzfurnieren 2a, 2b ein Schichtkörperrohling 6a hergestellt.

Dazu werden zur Vorbereitung zunächst die zu verklebenden Flächen der beiden Furniere 2a, 2b durch Schleifen angerauht.

Auf ein Verstärkungspapier 4 wird anschließend beidseitig gleichmäßig Polyurethanklebstoff gegeben und die Furniere 2a, 2b von beiden Seiten auf das Verstärkungspapier 4 gepresst.

Weisen die Holzschichten 2a, 2b eine ausreichende Stabilität auf, kann alternativ auch auf einen Verstärkungsträger 4 verzichtet werden; in diesem Fall würden die Furniere 2a, 2b direkt miteinander verklebt werden.

Der als Zwischenprodukt durch den ersten Schritt S1 entstandene Schichtkörperrohling 6a wird anschließend in einem zweiten Schritt S2 mittels einer Anordnung von Walzen 5 derart gewalzt, dass die Mikrostruktur des Holzes auf der gesamten Fläche der Holzschichten 2a, 2b durchgehend zerbrochen, oder zumindest angebrochen wird, ohne dass die mit bloßem Auge sichtbare Makrostruktur des Holzes Schaden nimmt. Dieser Schritt wird zweimal wiederholt, wobei der Schichtkörperrohling 6a, 6b vor den einzelnen Walzvorgängen in einem dritten Schritt S3 zweimal horizontal um jeweils 45° in derselben Richtung gedreht wird. Durch dieses Walzen des Schichtkörperrohlings 6a, 6b in verschiedenen Richtungen wird die Mikrostruktur der Holzschichten 2a, 2b sowohl mit als auch entgegen der Maserung und Faserrichtung gebrochen.

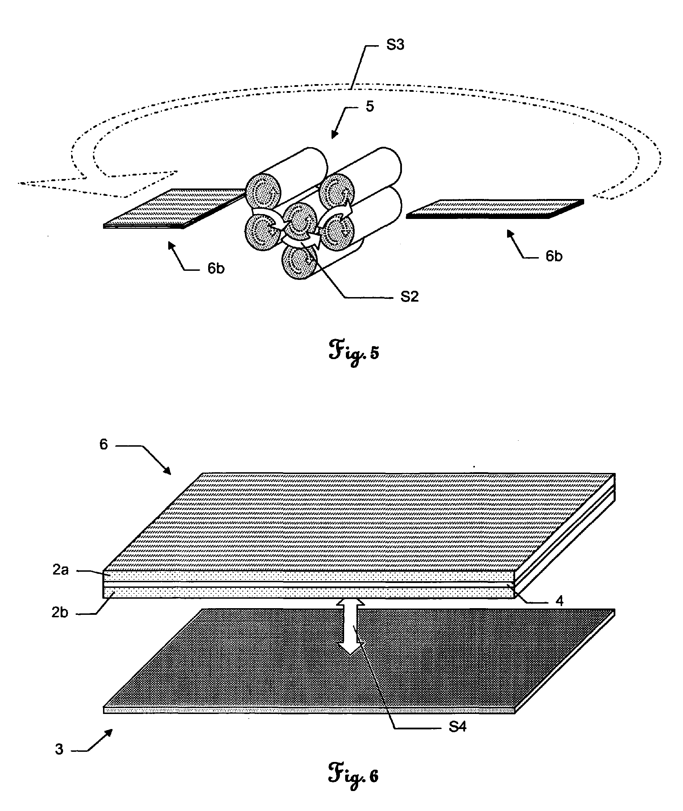

Der gewalzte Schichtkörperrohling 6 wird, wie in Figur 6 dargestellt, anschließend in einem vierten Schritt S4 mit einer flexiblen Trägerschicht 3 aus Pergament verbunden. Dies geschieht wiederum durch Kleben mit einem Polyurethanklebstoff. Das Pergament 3 und die zu verklebende Fläche des Schichtkörperrohlings 6 werden vor dem Kleben durch Schleifen angerauht.

Der durch dieses Verfahren erhältliche flexible Schichtkörper 1 stellt bereits eine einfache Ausführungsform der Erfindung dar.

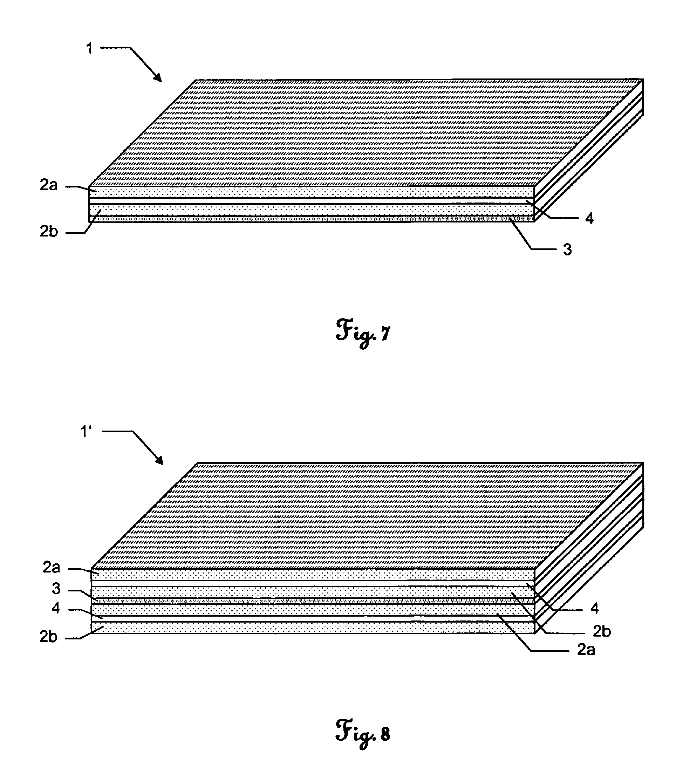

Durch einen fakultativen fünften Schritt S5 werden eine beliebige Zahl weiterer Schichtkörper 1 und/oder Schichtkörperrohlinge 6 miteinander verbunden und so weitere Ausführungsformen hergestellt. In Figur 8 ist beispielhaft eine alternative Ausführungsform 1' mit vier Holzschichten 2a, 2b und einer flexiblen Trägerschicht 3 aus Pergament, Spannpapier oder flexibler Kunststoff-Folie dargestellt.

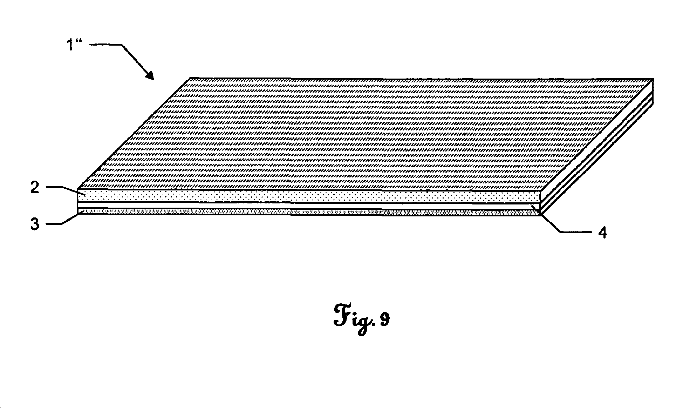

Auch eine alternative Ausführungsform 1'', die nur eine einzige Holzschicht 2 beinhaltet, wie in Figur 9 dargestellt, ist möglich, wenn im ersten Schritt S1 nur eine einzelne Holzschicht 2 mit einem Verstärkungsträger 4 zu einem Schichtkörperrohling 6a verbunden wird, bzw. wenn - eine entsprechende Stabilität der Holzschicht 2 vorausgesetzt - der erste Schritt S1 ausgelassen wird, und nur die einzelne Holzschicht 2 gewalzt und anschließend mit einer flexiblen Trägerschicht 3 aus Pergament, Spannpapier oder flexibler Kunststoff-Folie verbunden wird.

Der fertige Schichtkörper 1, 1', 1'' kann in einem sechsten Schritt S6 anschließend in eine gewünschte Form gebracht und/oder mit anderen Schichtkörpern 1, 1', 1'', 6 und/oder anderen Komponenten zum gewünschten Endprodukt kombiniert und/oder weiterverarbeitet werden.

Die in den Figuren 2 und 6 dargestellte Verbindung der einzelnen Schichten 2, 2a, 2b, 3, 4 zum Schichtkörperrohling 6a bzw. zum fertigen Schichtkörper 1 erfolgt bevorzugt mittels Kleben, kann aber auch durch andere, insbesondere mechanische, Methoden oder durch eine Kombination solcher Methoden mit Kleben ausgeführt werden.

Im Falle des Klebens hat sich Polyurethanklebstoff als vorteilhaft erwiesen, der gleichmäßig über die gesamte zu verbindende Fläche verteilt wird. Die Erfindung ist prinzipiell aber auch mit anderen Klebstoffen ausführbar. Ebenso ist eine andere Verteilung des Klebstoffes möglich: so kann der Klebstoff beispielsweise punktuell, wellen- oder gitterförmig oder in parallelen Streifen aufgetragen werden.

## Patentansprüche

1. Verfahren zur Herstellung eines flexiblen holzhaltigen Schichtkörpers (1), mit mindestens den Schritten
• Bereitstellen (S1) eines flächigen Schichtkörperrohlings (6a) aus mindestens einer Holzschicht (2, 2a, 2b), insbesondere durch Verbinden mehrerer Holzschichten (2a, 2b),
• mindestens zweimaliges Walzen (S2) besagten Schichtkörperrohlings (6a) mittels einer Anordnung von Walzen (5), insbesondere durch Gegendruckwalzen,
• wobei der Schichtkörperrohling (6) zwischen den einzelnen Walzvorgängen (S2) in der Ebene der Fläche verdreht wird (S3), insbesondere um 45° oder 90°, und
• wobei der Schichtkörperrohling (6a) derart gewalzt wird, dass die mechanische Festigkeit bewirkende Mikrostrukturen der mindestens einen Holzschicht (2, 2a, 2b) auf einer Größenskala unterhalb der Schwelle des mit bloßem Auge Sichtbaren kontinuierlich, im wesentlichen vollflächig und in einer Weise zerstört werden, dass die mindestens eine Holzschicht (2, 2a, 2b) ihre natürliche mechanische Festigkeit mindestens teilweise verliert, und
• Verbinden (S4) des gewalzten Schichtkörperrohlings (6) mit mindestens einer flexiblen Trägerschicht (3).

2. Verfahren nach Anspruch 1,
**dadurch gekennzeichnet, dass**
die mindestens eine Holzschicht (2, 2a, 2b) eine Stärke von 0,1 bis 6 mm, insbesondere von 0,3 bis 2 mm, aufweist.

3. Verfahren nach Anspruch 1 oder Anspruch 2,
**dadurch gekennzeichnet, dass**
beim Bereitstellen (S1) des Schichtkörperrohlings (6a) mehrere Holzschichten (2a, 2b) derart miteinander verbunden vorliegen, dass aneinandergrenzende Holzschichten (2a, 2b) bezüglich der Richtung ihrer Maserung, bzw. der Faserrichtung, gegenüber einander verdreht sind, insbesondere um 90°.

4. Verfahren nach einem der vorangegangenen Ansprüche,
**dadurch gekennzeichnet, dass**
beim Bereitstellen (S1) des Schichtkörperrohlings (6a) zur Erhöhung dessen mechanischer Festigkeit die mindestens eine Holzschicht (2, 2a, 2b) mit mindestens einem Verstärkungsträger (4) verbunden wird, insbesondere mit einem Verstärkungsträger (4) aus Papier oder einem vliesartigen Natur- oder Kunststoffmaterial.

5. Verfahren nach Anspruch 4,
**dadurch gekennzeichnet, dass**
das Verbinden der mindestens einen Holzschicht (2, 2a, 2b) mit dem mindestens einen Verstärkungsträger (4) durch Kleben erfolgt, insbesondere mittels eines Klebstoffes auf Basis von Polyurethan.

6. Verfahren nach einem der vorangegangenen Ansprüche,
**gekennzeichnet durch**
dreimaliges, Walzen (S2) des Schichtkörperrohlings (6a, 6b).

7. Verfahren nach Anspruch 6,
**gekennzeichnet durch**
Verdrehen (S3) des Schichtkörperrohlings (6b) zwischen den einzelnen Walzvorgängen (S2) in der Ebene der Fläche, insbesondere um 45° oder 90°.

8. Verfahren nach einem der vorangegangenen Ansprüche,
**dadurch gekennzeichnet, dass**
die flexible Trägerschicht (3) hauptsächlich oder vollständig aus Pergament, Spannpapier oder flexibler Kunststoff-Folie, insbesondere einer Folie aus Polypropylen, oder einem mindestens einen dieser Stoffe beinhaltenden Verbundmaterial besteht und sich im wesentlichen über die Gesamtheit jeweils einer Fläche der angrenzenden mindestens einen Holzschicht (2, 2a, 2b) erstreckt.

9. Verfahren nach einem der vorangegangenen Ansprüche,
**dadurch gekennzeichnet, dass**
die flexible Trägerschicht (3) gefärbt ist, insbesondere mit Luganil oder einem sauren Farbstoff.

10. Verfahren nach einem der vorangegangenen Ansprüche,
**dadurch gekennzeichnet, dass**
das Verbinden (S4) des gewalzten Schichtkörperrohlings (6) mit der flexiblen Trägerschicht (3) durch Kleben erfolgt, insbesondere mittels eines Klebstoffes auf Basis von Polyurethan.

11. Verfahren nach einem der vorangegangenen Ansprüche,
**dadurch gekennzeichnet, dass**
zum Verbinden (S4) des gewalzten Schichtkörperrohlings (6) mit der flexiblen Trägerschicht (3) mindestens eine Oberfläche des gewalzten Schichtkörperrohlings (6) und/oder der flexiblen Trägerschicht (3) geschliffen oder mittels eines Lasers angerauht wird.

12. Flexibler holzhaltiger Schichtkörper (1) aus mindestens zwei Schichten, davon
• mindestens einer Holzschicht (2, 2a, 2b), die insbesondere ein Furnier ist, wobei die mechanische Festigkeit bewirkende Mikrostrukturen dieser Holzschicht (2, 2a, 2b) durch mindestens zweimaliges Walzen (S2) in zwei in der Ebene der Fläche verdrehten Richtungen auf einer Größenskala unterhalb der Schwelle des mit bloßem Auge Sichtbaren im wesentlichen vollflächig und in einer Weise in Längs- wie in Querrichtung durchgehend und im wesentlichen über die gesamte Breite, Länge und Tiefe der Holzschichten zerstört sind, dass die Holzschicht (2, 2a, 2b) ihre natürliche mechanische Festigkeit mindestens teilweise verloren hat, und
• mindestens einer flexiblen Trägerschicht (3).

13. Flexibler holzhaltiger Schichtkörper (1) nach Anspruch 12,
**dadurch gekennzeichnet, dass**
die flexible Trägerschicht (3) hauptsächlich oder vollständig aus Pergament, Spannpapier oder flexibler Kunststoff-Folie, insbesondere einer Folie aus Polypropylen, oder einem mindestens einen dieser Stoffe beinhaltenden Verbundmaterial besteht und sich im wesentlichen über die Gesamtheit jeweils einer Fläche der angrenzenden mindestens einen Holzschicht (2, 2a, 2b) erstreckt.

14. Flexibler holzhaltiger Schichtkörper (1) nach Anspruch 12 oder Anspruch 13,
**gekennzeichnet durch**
einen Verstärkungsträger (4), der im wesentlichen aus Papier oder einem vliesartigen Natur- oder Kunststoffmaterial besteht.

15. Verwendung des flexiblen holzhaltigen Schichtkörpers (1) nach einem der Ansprüche 12 bis 14
zur Herstellung eines der folgenden Artikel:
• Behälter, insbesondere in der Form von
∘ Verpackungsmaterial,
∘ Taschen,
∘ Koffer,
∘ Etuis,
∘ Schatullen oder
∘ Dosen,
• Spielzeug,
• Kleidungsstücke, insbesondere in der Form von
∘ Hüten und anderen Kopfbedeckungen oder
∘ Schuhen,
• Accessoires, insbesondere in der Form von
∘ Brillengestellen,
∘ Armbändern oder
∘ Uhrenarmbändern,
• Büromaterial,
• Möbel und andere Wohnrauminnengestaltungen,
• Sonnenschutz-, Sichtschutz- und Verdunklungssysteme, insbesondere in der Form von Jalousien oder Flächenvorhängen,
• Skier, Snowboards,
• Leuchtengehäuse, Lampenschirme oder
• Fahrzeug-Interieurs, insbesondere in der Form von Armaturen- oder Zierelementen.

## Claims

1. Method for producing a flexible wood-containing coating body (1), comprising at least the steps
• providing (S1) a two-dimensional coating body blank (6a) from at least one wooden layer (2, 2a, 2b), in particular by connecting a plurality of wooden layers (2a, 2b),
• rolling (S2) the aforesaid coating body blank (6a) at least twice by means of an arrangement of rolls (5), in particular by opposed-pressure rolls,
• the coating body blank (6) being rotated (S3) in the plane of the surface, in particular by 45° or 90°, between the individual rolling operations (S2) and
• the coating body blank (6a) being rolled in such a way that the microstructures of the at least one wooden layer (2, 2a, 2b) effecting the mechanical strength are destroyed to a magnitude scale below the threshold of that which is visible with the naked eye continuously, over substantially the entire area and in such a way that the at least one wooden layer (2, 2a, 2b) loses its natural mechanical strength, at least to some extent, and
• connecting (S4) the rolled coating body blank (6) to at least one flexible carrier layer (3).

2. Method according to Claim 1,
**characterized in that**
the at least one wooden layer (2, 2a, 2b) has a thickness of 0.1 to 6 mm, in particular of 0.3 to 2 mm.

3. Method according to Claim 1 or Claim 2,
**characterized in that**
when providing (S1) the coating body blank (6a), a plurality of wooden layers (2a, 2b) which are connected to one another are present in such a way that adjacent wooden layers (2a, 2b) are rotated with respect to one another with regard to the direction of their grain or the fibre direction, in particular through 90°.

4. Method according to any one of the preceding claims,
**characterized in that**
when providing (S1) the coating body blank (6a), in order to increase the mechanical strength thereof, the at least one wooden layer (2, 2a, 2b) is connected to at least one reinforcing substrate (4), in particular to a reinforcing substrate (4) made of paper or a nonwoven-like natural or synthetic material.

5. Method according to Claim 4,
**characterized in that**
the at least one wooden layer (2, 2a, 2b) is connected to the at least one reinforcing substrate (4) by adhesive bonding, in particular by means of an adhesive based on polyurethane.

6. Method according to any one of the preceding claims,
**characterized by**
threefold rolling (S2) of the coating body blank (6a, 6b).

7. Method according to Claim 6,
**characterized by**
rotating (S3) the coating body blank (6b) in the plane of the surface between the individual rolling operations (S2), in particular through 45° or 90°.

8. Method according to any one of the preceding claims,
**characterized in that**
the flexible carrier layer (3) is primarily or wholly composed of parchment, Japanese tissue paper or flexible plastic film, in particular a film made of polypropylene, or a composite material containing at least one of these materials, and extends substantially over the whole of respectively one surface of the adjacent at least one wooden layer (2, 2a, 2b).

9. Method according to any one of the preceding claims,
**characterized in that**
the flexible carrier layer (3) is dyed, in particular with luganil or an acid dye.

10. Method according to any one of the preceding claims,
**characterized in that**
the rolled coating body blank (6) is connected (S4) to the flexible carrier layer (3) by adhesive bonding, in particular by means of an adhesive based on polyurethane.

11. Method according to any one of the preceding claims,
**characterized in that**
in order to connect (S4) the rolled coating body blank (6) to the flexible carrier layer (3), at least one surface of the rolled coating body blank (6) and/or the flexible carrier layer (3) is ground or roughened by means of a laser.

12. Flexible wood-containing coating body (1) comprising at least two layers, thereof
• at least one wooden layer (2, 2a, 2b) which in particular is a veneer, the microstructures of this wooden layer (2, 2a, 2b) effecting the mechanical strength being destroyed to a magnitude scale below the threshold of that which is visible with the naked eye in two directions rotated in the plane of the surface by means of at least two-fold rolling (S2) in the longitudinal direction and in the transverse direction, continuously and substantially over the entire width, length and depth of the wooden layers, in such a way that the wooden layer (2, 2a, 2b) has lost its natural mechanical strength, at least to some extent, and
• at least one flexible carrier layer (3).

13. Flexible wood-containing coating body (1) according to Claim 12,
**characterized in that**
the flexible carrier layer (3) is primarily or wholly composed of parchment, Japanese tissue paper or flexible plastic film, in particular a film made of polypropylene, or a composite material containing at least one of these materials, and extends substantially over the whole of respectively one surface of the adjacent at least one wooden layer (2, 2a, 2b).

14. Flexible wood-containing coating body (1) according to Claim 12 or Claim 13,
**characterized by**
a reinforcing substrate (4), which is substantially composed of paper or a nonwoven-like natural or synthetic material.

15. Use of the flexible wood-containing coating body (1) according to any one of Claims 12 to 14 for the production of one of the following articles:
• containers, in particular in the form of
∘ packaging material,
∘ bags,
∘ boxes,
∘ cases,
∘ caskets or
∘ cans,
• toys,
• items of clothing, in particular in the form of
∘ hats and other head coverings or
∘ shoes,
• accessories, in particular in the form of
∘ spectacle frames
∘ bracelets or
∘ watch straps,
• office materials,
• furniture and other living-room furnishings,
• sun protection, privacy and black-out systems, in particular in the form of Venetian blinds or panel curtains,
• skis, snowboards,
• lamp housings, lamp shades or
• vehicle interiors, in particular in the form of dashboard or decorative elements.

## Revendications

1. Procédé pour la fabrication d'un corps stratifié flexible contenant du bois (1) avec au moins les étapes :
• mise à disposition (S1) d'une pièce brute de corps stratifié (6a) plate composée d'au moins une couche de bois (2, 2a, 2b), en particulier par l'assemblage de plusieurs couches de bois (2a, 2b),
• au moins passage au rouleau deux fois (S2) de ladite pièce brute de corps stratifié (6a) au moyen d'un arrangement de rouleaux (5), en particulier par des rouleaux de contre-pression,
• cependant que la pièce brute de corps stratifié (6) est tordue (S3) entre les différentes opérations de roulement (S2) dans le plan de la surface, en particulier de 45° ou de 90° et
• cependant que la pièce brute de corps stratifié (6a) est passée au rouleau de telle manière que les microstructures qui causent la résistance mécanique de la couche de bois qui existe au moins (2, 2a, 2b) sont détruites en continu sur une échelle de grandeur en dessous du seuil de ce qui est visible à l'oeil nu, substantiellement sur toute la surface et d'une manière telle que la couche de bois qui existe au moins (2, 2a, 2b) perd au moins partiellement sa résistance mécanique naturelle et
• assemblage (S4) de la pièce brute de corps stratifié (6) qui a été passée au rouleau avec au moins une couche porteuse flexible (3).

2. Procédé selon la revendication 1, **caractérisé en ce que** la couche de bois qui existe au moins (2, 2a, 2b) présente une épaisseur de 0,1 à 6 mm, en particulier de 0,3 à 2 mm.

3. Procédé selon la revendication 1 ou 2, **caractérisé en ce que**, lors de la mise à disposition (S1) de la pièce brute de corps stratifié (6a), il y a plusieurs couches de bois (2a, 2b) qui sont assemblées l'une à l'autre de telle manière que des couches de bois adjacentes (2a, 2b) sont tordues l'une par rapport à l'autre, en particulier de 90°, pour ce qui est du sens de leur motif ou du sens des fibres.

4. Procédé selon l'une des revendications précédentes, **caractérisé en ce que**, lors de la mise à disposition (S1) de la pièce brute de corps stratifié (6a), pour augmenter sa résistance mécanique, la couche de bois qui existe au moins (2, 2a, 2b) est assemblée à au moins un support de renforcement (4), en particulier à un support de renforcement (4) en papier ou en un matériau naturel ou synthétique de type non-tissé.

5. Procédé selon la revendication 4, **caractérisé en ce que** l'assemblage de la couche de bois qui existe au moins (2, 2a, 2b) avec le support de renforcement qui existe au moins (4) se fait par collage, en particulier au moyen d'une colle à base de polyuréthane.

6. Procédé selon l'une des revendications précédentes, **caractérisé par** un passage au rouleau trois fois (S2) de la pièce brute de corps stratifié (6a, 6b).

7. Procédé selon la revendication 6, **caractérisé par** la torsion (S3) de la pièce brute de corps stratifié (6a) entre les différentes opérations de passage au rouleau (S2) dans le plan de la surface, en particulier de 45° ou de 90°.

8. Procédé selon l'une des revendications précédentes, **caractérisé en ce que** la couche porteuse flexible (3) est constituée principalement ou entièrement par du parchemin, du papier japonais ou une feuille de plastique flexible, en particulier une feuille de polypropylène ou une matière composite qui contient l'une de ces substances et qui s'étend substantiellement sur la totalité de respectivement une surface de la couche de bois adjacente qui existe au moins (2, 2a, 2b).

9. Procédé selon l'une des revendications précédentes, **caractérisé en ce que** la couche porteuse flexible (3) est colorée, en particulier avec du Luganil ou un colorant acide.

10. Procédé selon l'une des revendications précédentes, **caractérisé en ce que** l'assemblage (S4) de la pièce brute de corps stratifié passée au rouleau (6) avec la couche porteuse flexible (3) se fait par collage, en particulier au moyen d'une colle à base de polyuréthane.

11. Procédé selon l'une des revendications précédentes, **caractérisé en ce que** pour l'assemblage (S4) de la pièce brute de corps stratifié passée au rouleau (6) avec la couche porteuse flexible (3) au moins une surface de la pièce brute de corps stratifié passée au rouleau (6) et/ou de la couche porteuse flexible (3) est meulée ou rendue rugueuse au moyen d'un laser.

12. Corps stratifié flexible contenant du bois (1) composé d'au moins deux couches dont
• au moins une couche de bois (2, 2a, 2b) qui est en particulier un placage, les microstructures de cette couche de bois (2, 2a, 2b) qui causent la résistance mécanique étant détruites par le passage au rouleau au moins deux fois (S2) dans deux directions tordues dans le plan de la surface sur une échelle de grandeur en dessous du seuil de ce qui est visible à l'oeil nu substantiellement sur toute la surface et de manière continue dans le sens longitudinal aussi bien que dans le sens transversal et substantiellement sur toute la largeur, la longueur et la profondeur des couches de bois d'une manière que la couche en bois (2, 2a, 2b) a perdu au moins partiellement sa résistance mécanique naturelle et
• au moins une couche porteuse flexible (3).

13. Corps stratifié flexible contenant du bois (1) selon la revendication 12, **caractérisé en ce que** la couche porteuse flexible (3) est constituée principalement ou entièrement par du parchemin, du papier japonais ou une feuille de plastique flexible, en particulier une feuille de polypropylène ou une matière composite qui contient l'une de ces substances et qui s'étend substantiellement sur la totalité de respectivement une surface de la couche de bois adjacente qui existe au moins (2, 2a, 2b).

14. Corps stratifié flexible contenant du bois (1) selon la revendication 12 ou 13, **caractérisé par** un support de renforcement (4) qui est constitué substantiellement par du papier ou un matériau naturel ou synthétique de type non-tissé.

15. Utilisation du corps stratifié flexible contenant du bois (1) selon l'une des revendications 12 à 14 pour la fabrication d'un des articles suivants :
• conteneur, en particulier en forme de
o matériau d'emballage,
o sacs,
valises,
∘ étuis,
∘ coffrets ou
∘ boîtes,
• jouet,
• vêtements, en particulier en forme de
∘ chapeaux et autres coiffures ou
∘ chaussures,
• accessoires, en particulier en forme de
∘ montures de lunettes,
∘ bracelets ou
∘ bracelets de montres,
• matériel de bureau,
• meubles et autres agencements d'habitat intérieur,
• systèmes de protection contre le soleil, de protection contre les regards et d'assombrissement, en particulier en forme de stores ou de parois japonaises,
• skis, snowboards,
• carters de lampes, abat-jour ou
• intérieurs de véhicules, en particulier en forme d'éléments du tableau de bord ou d'éléments décoratifs.
